# EUROPEAN PATENT SPECIFICATION

(11) **EP 3 591 455 B1**
(45) Date of publication and mention of the grant of the patent: **11.10.2023**
(21) Application number: 18761017.5
(22) Date of filing: 27.02.2018
(51) Int. Cl.: G02B 27/01, G02B 5/30, G03B 21/14, G03B 21/16

(54) **OUTDOOR IMAGE IRRADIATION APPARATUS AND MOBILE OBJECT PROVIDED THEREWITH**
BILDBESTRAHLUNGSVORRICHTUNG FÜR DRAUSSEN UND DAMIT AUSGESTATTETES MOBILES OBJEKT
APPAREIL D'IRRADIATION D'IMAGE D'EXTÉRIEUR ET OBJET MOBILE ÉQUIPÉ DE CELUI-CI

(30) Priority: 28.02.2017 JP 2017035810
(43) Date of publication of application: 08.01.2020
(73) Proprietor: Kyocera Corporation, Kyoto-shi, Kyoto 612-8501 (JP)
(72) Inventor: KUBO, Yoshinori, Kyoto-shi Kyoto 612-8501 (JP)
(74) Representative: Viering, Jentschura & Partner mbB Patent- und Rechtsanwälte
(86) International application number: PCT/JP2018/007209
(87) International publication number: WO 2018/159598

(56) References cited:
- WO-A1-2015/093620
- WO-A1-2015/190157
- WO-A1-2016/098705
- JP-A- H11 337 919
- JP-A- 2004 245 914
- JP-A- 2010 113 197
- JP-A- 2016 197 173
- JP-A- 2017 009 666
- JP-A- 2017 015 778
- US-A1- 2007 217 010
- US-A1- 2011 090 432
- US-A1- 2014 098 420

## Description

### TECHNICAL FIELD

The present disclosure relates to an outdoor image irradiation apparatus such as an on-vehicle head up display apparatus, and a mobile object provided therewith.

### BACKGROUND ART

There have been suggested outdoor image irradiation apparatuses for irradiating image information displayed on liquid crystal panels and the like on a front glass and the like for causing persons on board to visually recognize the reflected image information. Such outdoor image irradiation apparatuses are also called as head up display apparatuses (hereinafter, simply referred to as HUD apparatuses).

US 2011/090432 A1 discloses a projection display including a light source, a liquid crystal panel encapsulating a vertical alignment mode liquid crystal between a first substrate and a second substrate which are opposite to each other, the liquid crystal panel modulating light emitted from the light source, a longer axis of a molecule of the vertical alignment mode liquid crystal tilted from the normal direction of the first substrate, a projection lens projecting light modulated by the liquid crystal panel, a first polarization plate placed on an optical path from the light source to the liquid crystal panel, a second polarization plate placed on an optical path from the liquid crystal panel to the projection lens, an optical-compensation plate placed between the liquid crystal panel and the second polarization plate, and the optical-compensation plate including a plate-like base and a retardation plate formed on a surface of the plate-like base.

JP 2017 015778 A discloses a HUD device comprising a projector for projecting an image as a light that is polarized in the direction of a polarization axis; a polarizer placed on an optical path formed by the light of the image and having a nature that makes the light polarized along a transmission axis pass therethrough; and a retardation plate placed between the polarizer on the optical path and the windshield and having a nature that changes the polarization direction of a light passing therethrough by causing a phase difference to occur. The fast direction of the retardation plate crosses each of a direction that corresponds to the polarization axis, a direction that corresponds the transmission axis, and a direction that corresponds to an S-polarized light of the windshield.

### RELATED ART DOCUMENTS

### PATENT DOCUMENTS

Patent Document 1: Japanese Unexamined Patent Publication No. 2010-113197
Patent Document 2: Japanese Unexamined Patent Publication No. 2012-103331
US 2011/090432 A1 JP2017 009666 A
JP 2017 015778 A

### SUMMARY OF THE INVENTION

The present invention provides an outdoor image irradiation apparatus according to claim 1, and outdoor image irradiation apparatus according to claim 2, and a mobile object according to claim 11.

### BRIEF DESCRIPTION OF THE DRAWINGS

Fig. 1 is a schematic view of an outdoor image irradiation apparatus according to a first embodiment.
Fig. 2 is a schematic view of an outdoor image irradiation apparatus according to a second embodiment.
Fig. 3 is a schematic view of an outdoor image irradiation apparatus according to a third embodiment.
Fig. 4 is a schematic view of an outdoor image irradiation apparatus according to a fourth embodiment.
Fig. 5 is a view illustrating a sapphire crystal structure.

### EMBODIMENTS FOR CARRYING OUT THE INVENTION

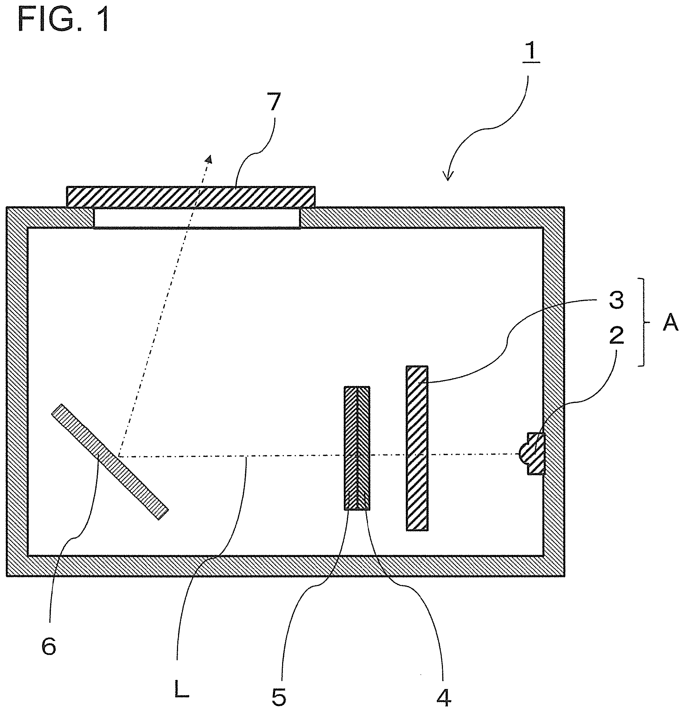

An outdoor image irradiation apparatus according to the present disclosure will be described, by exemplifying an on-vehicle HUD apparatus, which is an image irradiation apparatus for a mobile object, with reference to the drawings. Fig. 1 is a schematic view of an HUD apparatus 1 according to a first embodiment. The HUD apparatus 1 includes an image light emission device A, a polarizer 4, and a wave plate 5 formed from sapphire. The image light emission device A includes a light source 2 and an image formation portion 3. The polarizer 4 polarizes image light from the image formation portion 3. Further, in Fig. 1, there is illustrated an example where there are a mirror 6 and an emission window 7 and, in the figure, there is illustrated, by a one-dot chain line arrow, an emission light path L for image light including light emitted from the light source 2.

The HUD apparatus is generally mounted, in the form of being embedded in a dashboard. If sunlight enters the HUD apparatus, further is concentrated by the mirror and lenses which are placed on the light path, and then reaches the wave plate, thus, the wave plate is irradiated with UV rays or the wave plate and reaches a higher temperate by the concentrated sunlight, this degrades the functions of the wave plate, which may make it impossible to maintain the visibility.

In the HUD apparatus 1 according to the first embodiment, the image light emission device A, the polarizer 4, and the wave plate 5 are positioned in that order on the emission light path L. In the HUD apparatus 1 having the aforementioned configuration, the polarizer 4 polarizes the light from the image light emission device A, and the wave plate 5 adjusts the polarization direction of the polarized light in such a way as to increase vertical polarized light components, which inhibits the degradation of the visibility due to the polarization sunglasses. Further, in the HUD apparatus 1 according to the first embodiment, the wave plate 5 is formed from sapphire which is not degraded by UV rays and has excellent heat resistance and, therefore, the wave plate 5 is less degraded in function by sunlight and can be used for longer time periods.

In the HUD apparatus 1 according to the present disclosure, the wave plate 5 is formed from sapphire. In contrast thereto, when the wave plate is formed from a resin, the wave plate may be degraded by UV rays, heat and the like. Also, in the HUD apparatus 1 according to the present disclosure, the wave plate 5 has higher heat conductivity and higher strength, even in comparison with crystallized quartz having higher strength against heat than those of resins. Therefore, the wave plate 5 can be suppressed from being raised in temperature. This inhibits degradations of the functions of the wave plate 5, such as deviations of the polarization direction, due to thermal expansions and thermal stresses caused by rise in temperature. Further, this inhibits the occurrence of fractures of the wave plate 5 due to thermal stresses.

The wave plate 5 refers to a birefringent element having the function of causing a retardation between polarized light components orthogonal to each other. The wave plate 5 is also referred to as a retardation plate. The wave plate 5 according to the present embodiment has the function of changing the polarization direction of the image light emitted from the polarizer 4, in such a way as to improve the visibility, when a person on board is wearing polarization sunglasses. Generally, such polarization sunglasses are designed in such a way as to intercept horizontal polarized light components while transmitting vertical polarized light components therethrough. Therefore, for example, light including a greater amount of horizontal polarized light components is converted into light including a greater amount of vertical polarized light components.

Further, a half wave plate can be employed as the wave plate 5. The half wave plate causes a retardation of π (180 degrees) and is used for changing the polarization direction of linearly polarized light. When the half wave plate is employed as the wave plate 5, horizontal polarized light components can be changed to vertical polarized light components, for which polarization sunglasses exhibit higher transmittance. This can improve the visibility of image information. Further, the half wave plate is capable of arbitrarily changing the polarization direction, by changing the angle formed between the polarization direction and a fast axis, which will be described later. This enables changing oblique polarized light components, as well as horizontal polarized light components, into vertical polarized light components. When polarized light components in light having been transmitted through the polarizer 4 exist between the horizontal direction and the vertical direction, it is possible to change oblique polarized light components into vertical polarized light components, by setting the angle of conversion for the polarization direction by the wave plate 5 to be smaller than 90 degrees. This can improve the visibility of image information.

Further, a quarter wave plate can be also employed as the wave plate 5. The quarter wave plate causes a retardation of π/2 (90 degrees) and is used for changing linearly polarized light into circularly polarized light or elliptically polarized light. By employing the quarter wave plate as the wave plate 5, it is possible to improve the visibility in cases of using polarization sunglasses and, furthermore, it is possible to increase vertical polarized light components, while suppressing the dependence on the angle. This can suppress the change of visibility, even when the relative angles between the image information and the eyes of the persons on board have been changed.

Any wave plate 5 is placed such that the image light having been transmitted through the wave plate 5 includes increased vertical polarized light components, in comparison with the image light before being transmitted through the wave plate 5 or such that the polarization direction gets closer to the vertical direction. This can maintain preferable visibility even when wearing polarization sunglasses.

Further, the sapphire used as the wave plate 5 refers to a single crystal of aluminum oxide. Sapphire is excellent in heat resistance as described above and, in addition thereto, sapphire is excellent in heat conductivity and heat dissipation property and is excellent in that it can suppress rise in temperature therein. For example, while crystallized quartz has heat conductivity of 6.2 to 10.4 W/m·K, sapphire has heat conductivity of 42 W/m·K, which is excellent in heat conductivity.

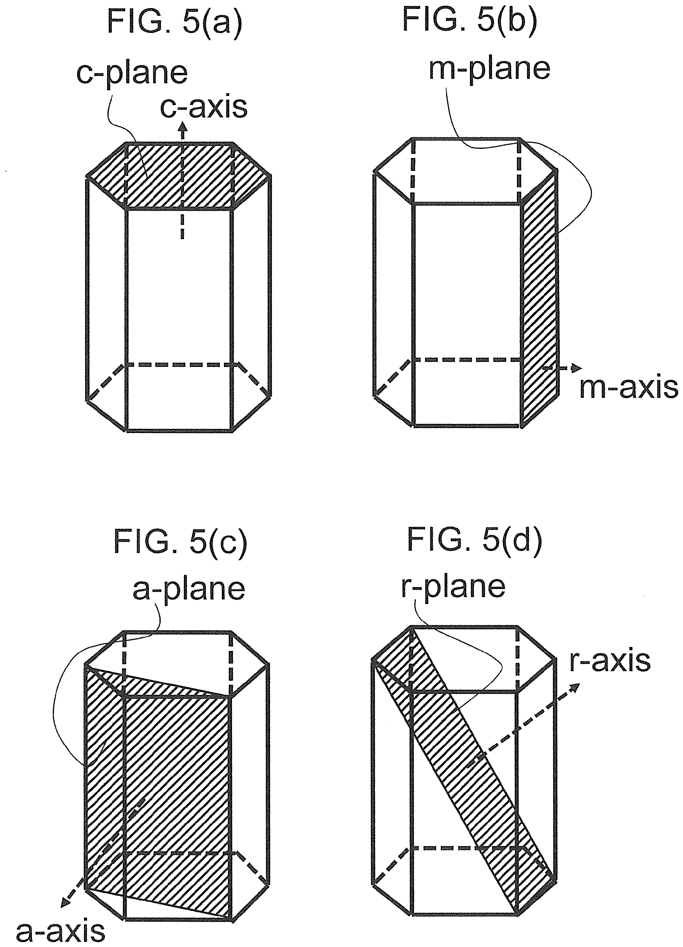

Fig. 5 is a view illustrating a crystal structure of sapphire. As illustrated in Figs. 5(a) to 5(d), sapphire has crystal planes such as a c-plane, an m-plane, an a-plane, and an r-plane, as representative crystal planes.

The sapphire used as the wave plate 5 is a material with birefringence (having anisotropy in refractive index). In such a material with birefringence, an axis having a smaller refractive index is referred to as a fast axis, while an axis having a larger refractive index is referred to as a slow axis. For example, with respect to light with a wavelength of 589 nm, the sapphire has a refractive index of 1.768 in the c-axis direction and has a refractive index of 1.760 in the direction vertical to the c-axis. In this case, a slow axis is in the c-axis direction, and a fast axis is in the direction vertical to the c-axis.

A main surface of the wave plate 5 formed from sapphire may be formed by an m-plane or an a-plane. When the main surface is formed by an m-plane, an a-axis forms a fast axis, and a c-axis forms a slow axis. When the main surface is formed by an a-plane, an m-axis forms a fast axis, and a c-axis forms a slow axis. By employing this configuration, the light axis of image light incident to the main surface of the wave plate 5 is made to be vertical to the optical axis (c-axis) . With this configuration, it is possible to prevent the occurrence of deviation of the direction of propagation due to the difference of the polarization direction, which can suppress image blurs.

Further, sapphire also has anisotropy in mechanical strength. Sapphire exhibits a largest flexural strength in the c-axis direction in an a-plane. Therefore, when the wave plate 5 has a shape with a longer-axis (longer side) direction and a shorter-axis (shorter side) direction, such as a rectangular plate shape, the wave plate 5 has a main surface formed by an a-plane, and the longer-axis direction corresponds to the c-axis direction.

Further, when its main surface is formed by an m-plane, there is smaller anisotropy in flexural strength in planer directions. Therefore, the wave plate 5 with a disk shape has a main surface formed by an m-plane.

Wave plates 5 can be largely sorted into three types, which are true-zero order types, multiple-order types, and compound-zero order types, depending on their configurations.

A true-zero order wave plate 5 has an advantage of being less prone to induce retardation deviations resulted from wavelength shifts, temperature changes or oblique incidences. The true-zero order wave plate 5 can be made to have a smaller plate thickness. This enables size reduction of the HUD apparatus 1.

In order to provide a true-zero order quarter wave plate 5 for a wavelength of 589 nm, using sapphire with a main surface formed by an m-plane or an a-plane, it is necessary to make the retardation to be 147.25 nm and, therefore, the plate thickness can be made to be 18.4 micrometers. Further, in order to provide a true-zero order half wave plate 5 for a wavelength of 589 nm, similarly, it is necessary to make the retardation to be 294.5 nm and, therefore, the plate thickness can be made to be 36.8 micrometers.

With a multiple-order wave plate 5, the plate thickness can be changed as required. This enables providing a wave plate with strength having no problem in practical uses.

In cases of a multiple-order quarter wave plate 5 for a wavelength of 589 nm, using sapphire with a main surface formed by an m-plane or an a-plane, in order to cause retardations corresponding to 1.25, 2.25 and 3.25 times the wavelength, the plate thickness can be made to be 92.0 micrometers, 165.7 micrometers, and 239.3 micrometers. Assuming that the wavelength is λ (m), the refractive index difference between the slow axis and the fast axis is ΔN, and "n" is an integer, the plate thickness d (m) of the multiple-order quarter wave plate 5 is λ × (n+1/4) / ΔN. Similarly, in cases of a half wave plate 5, in order to cause retardations corresponding to 1.5, 2.5 and 3.5 times the wavelength, the plate thickness can be made to be 110.4 micrometers, 184.1 micrometers, and 257.7 micrometers. Assuming that the wavelength is λ (m), the refractive index difference between the slow axis and the fast axis is ΔN, and "n" is an integer, the plate thickness d (m) of the multiple-order half wave plate 5 is λ × (n + 1/2)/ ΔN.

A compound-zero order wave plate 5 is constituted by two sapphires formed to be of a multiple-order type, which are placed such that the light axes of the two sapphires are orthogonal to each other. With this configuration, the amounts of retardation shifts induced in the respective sapphires can be cancelled with each other, so that the resultant retardation has smaller wavelength dependence and smaller temperature dependence. Further, sapphire having a main surface formed by an m-plane or a-plane has anisotropy in flexural strength. However, since the compound-zero order wave plate 5 is formed from two sapphires, the compound-zero order wave plate 5 can be made to have smaller anisotropy in flexural strength.

In the compound-zero order wave plate 5, the difference in thickness between the two sapphires combined with each other may be equal to that of the true-zero order wave plate 5 or the multiple-order wave plate 5.

If the wave plate 5 formed from sapphire has a thickness of 0.1 mm or more, the wave plate 5 can exhibit sufficient mechanical strength and heat dissipation properties. Further, if a thickness is 0.5 mm or less, this preferably causes smaller phase deviations.

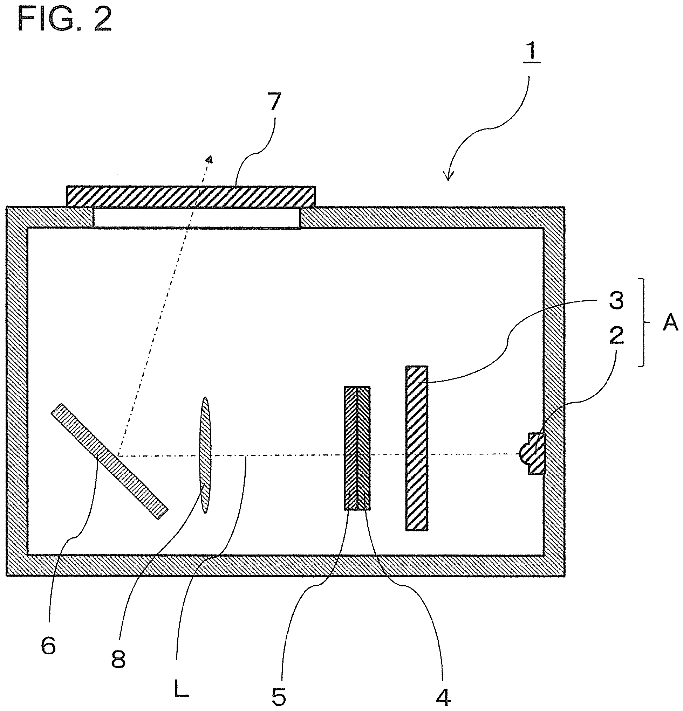

Next, Fig. 2, which illustrates a second embodiment, illustrates an example where a light spreading member 8 is provided between the wave plate 5 and the mirror 6, in comparison with the structure illustrated in Fig. 1. When the light spreading member 8 is provided between the wave plate 5 and the mirror 6, as illustrated in Fig. 2, image light can be enlarged by the light spreading member 8. Further, for providing images of the same size, the respective members can be made smaller, which enables size reduction of the HUD apparatus 1.

The light spreading member 8 has the function of concentrating sunlight, with respect to sunlight. In the HUD apparatus 1 according to the present embodiment, the wave plate 5 is formed from sapphire, and the wave plate 5 is less degraded in function. As the light spreading member 8, it is possible to employ a convex lens, for example.

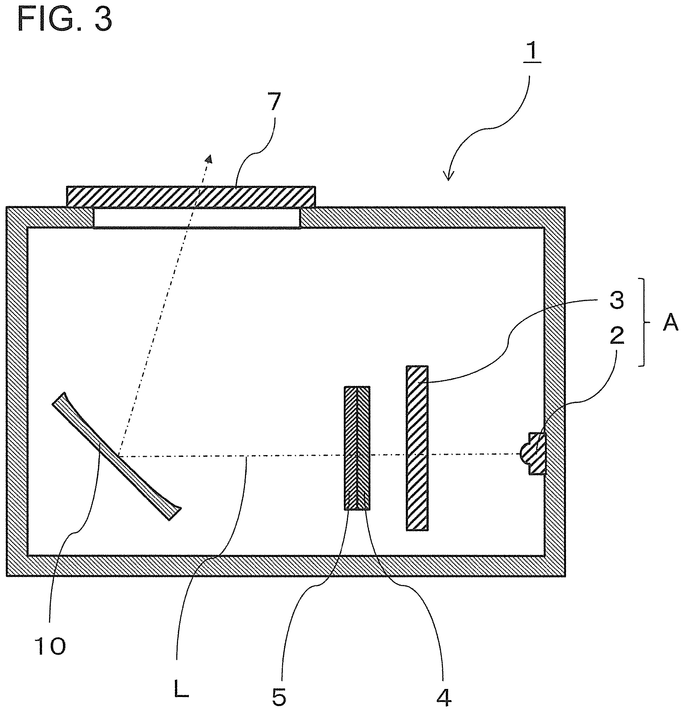

Next, Fig. 3, which illustrates a third embodiment, illustrates an example where a concave mirror 10 is provided as the mirror 6 in Fig. 1. When the concave mirror 10 is provided, as described above, the concave mirror 10 has both the functions of the mirror 6 and the light spreading member 8, which can reduce the number of members.

Further, in order to cope with the case where persons on board are wearing no polarization sunglasses, it is possible to provide a moving mechanism (not illustrated) for moving the wave plate 5 up to the outside of the light axis from on the light axis. The moving mechanism may include a driving portion constituted by a motor and the like.

In the HUD apparatus 1, not only the wave plate 5 but also the polarizer 4 are heated by external light and light emitted from the image light emission device A. In view of cooling the polarizer 4, the wave plate 5 can be brought in contact with the polarizer 4. By employing this configuration, it is possible to cool the polarizer 4. The wave plate 5 formed from sapphire is also capable of intercepting a portion of sunlight having intruded from the outside, which can suppress damages of the polarizer 4 due to external light.

When the wave plate 5 is in contact with the polarizer 4, as in the example of Fig. 1, heat is transferred therebetween through heat conduction between these solid bodies, which enhances the effect of cooling the polarizer 4. The polarizer 4 can be formed directly on the surface of the wave plate 5 or both of them can be adhered to each other with an adhesive layer interposed therebetween.

Further, while Fig. 1 illustrates an example where the wave plate 5 and the polarizer 4 have the same size, the wave plate 5 can be made larger than the polarizer 4. By employing this configuration, the wave plate 5 is made to have a larger surface area, which improves the heat dissipation property.

Further, the wave plate 5 may be placed close to the polarizer 4. Provided that the wave plate 5 is close to the polarizer 4 within the range within which the wave plate 5 can cool the polarizer 4, the wave plate 5 and the polarizer 4 may be spaced apart from each other. In this case, heat is transferred therebetween through gas existing therebetween. When the wave plate 5 and the polarizer 4 are placed in such a way as to be spaced apart from each other, the distance therebetween may be 0.1 mm to 50 mm.

The HUD apparatus 1 can be also designed such that the wave plate 5 is cooled by air flows. Such cooling by air flows can be performed by using a blowing member such as a fan, in order to cool the wave plate 5 through air. Further, it is also possible to utilize air flows caused by the movement of a mobile object such as a vehicle. Further, in order to enhance the cooling effect, cooling fins can be coupled to the wave plate 5. It is necessary that the cooling fins be formed, at least partially, on the portion of the wave plate 5 outside the range to be irradiated with light.

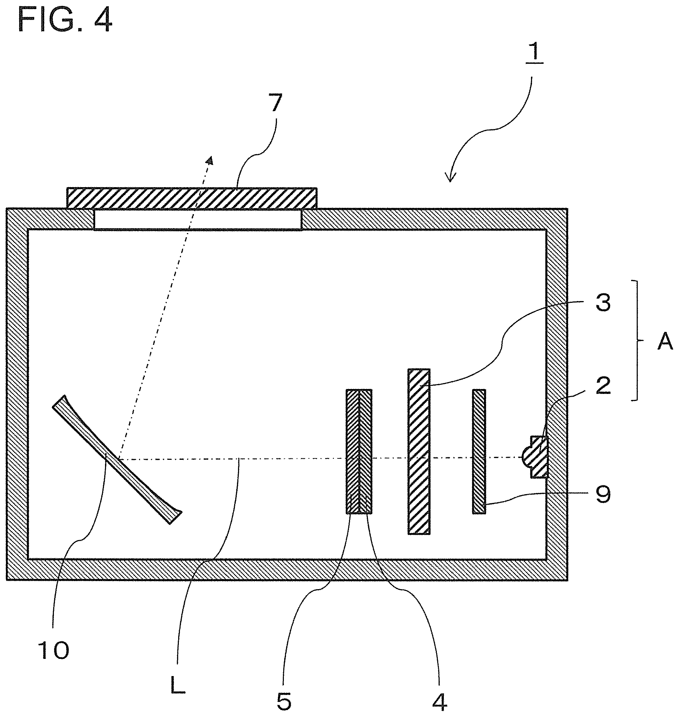

As in Fig. 4 illustrating a fourth embodiment, the HUD apparatus 1 can also include an incidence-side polarizer 9 placed between the light source 2 and the image formation portion 3, in addition to the polarizer 4 placed between the image formation portion 3 and the wave plate 5.

Further, the mean value of the transmittance of the wave plate 5 for a wavelength region of 200 to 400 nm may be smaller than the mean value of the transmittance of the wave plate 5 for a wavelength region of 400 to 800 nm. If the wave plate 5 has this configuration, the wave plate 5 can attenuate light within a so-called UV light region, which can suppress damages of the polarizer 4 due to degeneration of the polarizer 4.

Further, the wave plate 5 may have an absorption band within a wavelength region of 205 to 260 nm. By controlling the atmosphere during the growth of the sapphire crystal or during heat treatment after the growth, in such a way as to create a reducing atmosphere, it is possible to introduce defects caused by oxygen vacancies into the sapphire, thereby forming the sapphire which has an absorption band within the UV light region and can reduce UV light. The sapphire having defects caused by oxygen vacancies has defects called F centers and F centers +. F centers have an absorption band at 205 nm, while F+ centers have absorption bands at 210 nm, 230 nm, and 260 nm. By employing the sapphire having absorption bands within a wavelength region of 205 nm to 260 nm, as the wave plate 5, it is possible to attenuate UV light, which can suppress damages of the polarizer 4 due to degeneration of the polarizer 4.

As described above, with the mobile object incorporating the aforementioned HUD apparatus 1, even for persons on board who are wearing polarization sunglasses, it is possible to maintain the visibility of image information. Further, even under conditions where the mobile object is exposed to sunlight, it is possible to suppress image information from not being visually recognized. The mobile objects refer to, for example, vehicles, which also include ships, airplanes and the like. Further, sunlight also includes sunlight having been transmitted through windows of vehicles, as well as sunlight itself.

Although the embodiments of the present invention have been described above, the present invention is not limited to the aforementioned embodiments. Other embodiments are possible as long as they are covered by the independent appended claims. For example, the outdoor image irradiation apparatus can be also mounted on a goggle, helmet or the like and also can be installed in such a way as to project image information onto a building. Further, the display portion is not limited to a window and can be also constituted by a mirror. Further, in cases where the mobile object is a vehicle, the outdoor image irradiation apparatus can cause virtual images to be recognized in the opposite side from persons with respect to the window or in the side near to persons with respect to the window.

### DESCRIPTION OF THE REFERENCE NUMERAL

- 1:: Outdoor image irradiation apparatus (HUD apparatus)
- 2:: Light source
- 3:: Image formation portion
- A:: Image light emission device
- 4:: Polarizer
- 5:: Wave plate
- 6:: Mirror
- 7:: Emission window
- 8:: Light spreading member
- 9:: Incidence-side polarizer
- 10:: Concave mirror

## Claims

1. An outdoor image irradiation apparatus (1) comprising an image light emission device (A) for emitting image light, a polarizer (4), and a wave plate (5),
wherein the polarizer (4), and the wave plate (5) are positioned in that order on a light path from the image light emission device (A), and the wave plate (5) is formed from sapphire,
**characterized in that** the wave plate (5) has a main surface formed by an a-plane of the sapphire, the wave plate (5) has a shape having a longer-axis direction and a shorter-axis direction, and the longer-axis direction of the main surface of the wave plate (5) corresponds to a c-axis direction.

2. An outdoor image irradiation apparatus (1) comprising an image light emission device (A) for emitting image light, a polarizer (4), and a wave plate (5),
wherein the polarizer (4), and the wave plate (5) are positioned in that order on a light path from the image light emission device (A), and the wave plate (5) is formed from sapphire,
**characterized in that** the wave plate (5) has a disk shape having a main surface formed by an m-plane of the sapphire.

3. The outdoor image irradiation apparatus (1) according to claim 2, wherein the wave plate (5) is a compound-zero order wave plate in which two sapphires having the main surface formed by the m-plane are placed.

4. The outdoor image irradiation apparatus (1) according to any one of claims 1 to 3, wherein the wave plate (5) is a half wave plate.

5. The outdoor image irradiation apparatus (1) according to any one of claims 1 to 3, wherein the wave plate (5) is a quarter wave plate.

6. The outdoor image irradiation apparatus (1) according to any one of claims 1 to 5, wherein the polarizer (4) is positioned in contact with the wave plate (5).

7. The outdoor image irradiation apparatus (1) according to any one of claims 1 to 6, wherein the wave plate (5) has a thickness of 0.1 mm or more and 0.5 mm or less.

8. The outdoor image irradiation apparatus (1) according to any one of claims 1 to 7, wherein a mean value of a transmittance of the wave plate (5) for a wavelength region of 200 to 400 nm is smaller than a mean value of a transmittance of the wave plate (5) for a wavelength region of 400 to 800 nm.

9. The outdoor image irradiation apparatus (1) according to any one of claims 1 to 8, wherein the wave plate (5) has an absorption band within a wavelength region of 205 to 260 nm.

10. The outdoor image irradiation apparatus (1) according to any one of claims 1 to 9, further comprising a moving mechanism for moving the wave plate (5) between a position on the light path and a position outside the light path.

11. A mobile object comprising the outdoor image irradiation apparatus (1) according to any one of claims 1 to 10.

## Patentansprüche

1. Außenbildbestrahlungseinrichtung (1), umfassend eine Bildlichtemissionsvorrichtung (A) zum Emittieren von Bildlicht, einen Polarisator (4) und eine Wellenplatte (5),
wobei der Polarisator (4) und die Wellenplatte (5) in dieser Reihenfolge auf einem Lichtweg von der Bildlichtemissionsvorrichtung (A) positioniert sind, und wobei die Wellenplatte (5) aus Saphir gebildet ist, **dadurch gekennzeichnet, dass** die Wellenplatte (5) eine Hauptoberfläche, gebildet durch eine a-Ebene des Saphirs, aufweist, die Wellenplatte (5) eine Gestalt aufweist, die eine Längere-Achse-Richtung und eine Kürzere-Achse-Richtung aufweist, und wobei die Längere-Achse-Richtung der Hauptoberfläche der Wellenplatte (5) einer c-AchsenRichtung entspricht.

2. Außenbildbestrahlungseinrichtung (1), umfassend eine Bildlichtemissionsvorrichtung (A) zum Emittieren von Bildlicht, einen Polarisator (4) und eine Wellenplatte (5),
wobei der Polarisator (4) und die Wellenplatte (5) in dieser Reihenfolge auf einem Lichtweg von der Bildlichtemissionsvorrichtung (A) positioniert sind, und wobei die Wellenplatte (5) aus Saphir gebildet ist, **dadurch gekennzeichnet, dass** die Wellenplatte (5) eine Scheibengestalt aufweist, die eine Hauptoberfläche aufweist, die durch eine m-Ebene des Saphirs gebildet ist.

3. Außenbildbestrahlungseinrichtung (1) nach Anspruch 2, wobei die Wellenplatte (5) eine Verbundwellenplatte nullter Ordnung ist, in der zwei Saphire platziert sind, die die Hauptoberfläche durch die m-Ebene gebildet aufweisen.

4. Außenbildbestrahlungseinrichtung (1) nach einem der Ansprüche 1 bis 3, wobei die Wellenplatte (5) eine Halbwellenplatte ist.

5. Außenbildbestrahlungseinrichtung (1) nach einem der Ansprüche 1 bis 3, wobei die Wellenplatte (5) eine Viertelwellenplatte ist.

6. Außenbildbestrahlungseinrichtung (1) nach einem der Ansprüche 1 bis 5, wobei der Polarisator (4) in Kontakt mit der Wellenplatte (5) positioniert ist.

7. Außenbildbestrahlungseinrichtung (1) nach einem der Ansprüche 1 bis 6, wobei die Wellenplatte (5) eine Dicke von 0,1 mm oder mehr und 0,5 mm oder weniger aufweist.

8. Außenbildbestrahlungseinrichtung (1) nach einem der Ansprüche 1 bis 7, wobei ein Mittelwert einer Transmission der Wellenplatte (5) für eine Wellenlängenregion von 200 bis 400 nm kleiner als ein Mittelwert einer Transmission der Wellenplatte (5) für eine Wellenlängenregion von 400 bis 800 nm ist.

9. Außenbildbestrahlungseinrichtung (1) nach einem der Ansprüche 1 bis 8, wobei die Wellenplatte (5) ein Absorptionsband innerhalb einer Wellenlängenregion von 205 bis 260 nm aufweist.

10. Außenbildbestrahlungseinrichtung (1) nach einem der Ansprüche 1 bis 9, ferner umfassend einen Bewegungsmechanismus zum Bewegen der Wellenplatte (5) zwischen einer Position in dem Lichtweg und einer Position außerhalb des Lichtwegs.

11. Mobiles Objekt, das die Außenbildbestrahlungseinrichtung (1) nach einem der Ansprüche 1 bis 10 umfasst.

## Revendications

1. Appareil d'irradiation d'image d'extérieur (1) comprenant un dispositif d'émission de lumière d'image (A) pour émettre de la lumière d'image, un polariseur (4), et une lame à retard (5),
dans lequel le polariseur (4) et la lame à retard (5) sont positionnés dans cet ordre sur un chemin lumineux partant du dispositif d'émission de lumière d'image (A), et la lame à retard (5) est formée à partir de saphir,
**caractérisé en ce que** la lame à retard (5) a une surface principale formée par un plan a du saphir, la lame à retard (5) a une forme ayant une direction d'axe plus long et une direction d'axe plus court, et la direction d'axe plus long de la surface principale de la lame à retard (5) correspond à une direction de l'axe c.

2. Appareil d'irradiation d'image d'extérieur (1) comprenant un dispositif d'émission de lumière d'image (A) pour émettre de la lumière d'image, un polariseur (4), et une lame à retard (5),
dans lequel le polariseur (4) et la lame à retard (5) sont positionnés dans cet ordre sur un chemin lumineux partant du dispositif d'émission de lumière d'image (A), et la lame à retard (5) est formée à partir de saphir,
**caractérisé en ce que** la lame à retard (5) a une forme de disque ayant une surface principale formée par un plan m du saphir.

3. Appareil d'irradiation d'image d'extérieur (1) selon la revendication 2, dans lequel la lame à retard (5) est une lame à retard composée d'ordre zéro dans laquelle deux saphirs ayant la surface principale formée par le plan m sont placés.

4. Appareil d'irradiation d'image d'extérieur (1) selon l'une quelconque des revendications 1 à 3, dans lequel la lame à retard (5) est une lame demi-onde.

5. Appareil d'irradiation d'image d'extérieur (1) selon l'une quelconque des revendications 1 à 3, dans lequel la lame à retard (5) est une lame quart d'onde.

6. Appareil d'irradiation d'image d'extérieur (1) selon l'une quelconque des revendications 1 à 5, dans lequel le polariseur (4) est positionné en contact avec la lame à retard (5).

7. Appareil d'irradiation d'image d'extérieur (1) selon l'une quelconque des revendications 1 à 6, dans lequel la lame à retard (5) a une épaisseur de 0,1 mm ou plus et 0,5 mm ou moins.

8. Appareil d'irradiation d'image d'extérieur (1) selon l'une quelconque des revendications 1 à 7, dans lequel une valeur moyenne d'un facteur de transmission de la lame à retard (5) pour une région de longueur d'onde de 200 à 400 nm est inférieure à une valeur moyenne d'un facteur de transmission de la lame à retard (5) pour une région de longueur d'onde de 400 à 800 nm.

9. Appareil d'irradiation d'image d'extérieur (1) selon l'une quelconque des revendications 1 à 8, dans lequel la lame à retard (5) a une bande d'absorption à l'intérieur d'une région de longueur d'onde de 205 à 260 nm.

10. Appareil d'irradiation d'image d'extérieur (1) selon l'une quelconque des revendications 1 à 9, comprenant en outre un mécanisme mobile destiné à déplacer la lame à retard (5) entre une position sur le chemin lumineux et une position à l'extérieur du chemin lumineux.

11. Objet mobile comprenant l'appareil d'irradiation d'image d'extérieur (1) selon l'une quelconque des revendications 1 à 10.
